# EUROPEAN PATENT SPECIFICATION

(11) **EP 4 077 053 B1**
(45) Date of publication and mention of the grant of the patent: **04.06.2025**
(21) Application number: 19956359.4
(22) Date of filing: 19.12.2019
(51) Int. Cl.: B60R 11/02, B60R 11/00, B60R 13/02, B60J 5/04

(54) **SYSTEMS FOR LOUDSPEAKER ENCLOSURE INTEGRATION**
SYSTEM ZUR INTEGRATION VON LAUTSPRECHERBOXEN
SYSTÈMES D'INTÉGRATION D'ENCEINTE DE HAUT-PARLEUR

(43) Date of publication of application: 26.10.2022
(73) Proprietor: Harman International Industries, Incorporated, Stamford, CT 06901 (US)
(72) Inventor: GROLEAU, Patrick, South Lyon, Michigan 47178 (US)
(74) Representative: Westphal, Mussgnug & Partner, Patentanwälte mbB
(86) International application number: PCT/US2019/067635
(87) International publication number: WO 2021/126224

(56) References cited:
- WO-A1-2019/202661
- JP-A- 2013 095 312
- JP-A- H11 151 989
- KR-A- 20030 097 301
- KR-A- 20120 055 014
- US-A- 5 736 689
- US-A1- 2004 264 710

## Description

### TECHNICAL FIELD

Embodiments of the subject matter disclosed herein relate to the integration of a loudspeaker enclosure into a vehicle.

### BACKGROUND

Document US 5 736 689 A discloses a system for mounting an audio speaker within an automobile door, in which a bridge is mounted on and extends from a door interior support panel, and has an integral platform spaced from the support panel and surrounding a speaker opening. The body of the audio speaker is received within the bridge speaker opening, and mounting flange tabs on the speaker radially project from the speaker body and are releasably secured to the bridge platform. An exterior trim panel has a lip that surrounds a speaker opening in the trim panel. The trim panel lip is removably secured to the platform radially outwardly of the speaker, such that the trim panel and the speaker are removably secured to the platform independently of each other. A grill is removably secured to the trim panel overlying and enclosing the speaker opening in trim panel, and thus covering both the bridge platform and the speaker.

Document WO 2019/202661 Al discloses a speaker system including a first panel which is an outer panel of a door, a second panel which is provided on the passenger compartment side of the vehicle door and has an opening for sound emission, and the first panel and the second panel. A third panel provided between the two, a speaker unit that overlaps with the opening in a plan view from the passenger compartment along the central axis and emits sound toward the passenger compartment, and the speaker unit and the first. A sound absorbing material is provided so as to be superposed on a portion corresponding to the antinode of the acoustic particle velocity in the standing wave generated between the panel and the panel.

Document JP H11 151989 A discloses a structure for mounting a door speaker on an automobile door such as a front door, a rear door, and a back door.Loudspeaker enclosures are typically mounted to the inner panels of vehicle doors using fasteners. These inner panels are comprised of a thin sheet of metal without much structure. As such, when the fastened loudspeaker is in use, a lateral load may be imposed on the inner panel causing it to oscillate inward and outward. These oscillations increase the amount of vehicle buzz, squeak, and rattle (BSR) which may concern customers, decrease overall customer satisfaction with the vehicle, and increase warranty claims.

### SUMMARY

Embodiments are disclosed for systems for securing a loudspeaker in a vehicle system. In the claimed embodiment, a vehicle door comprises an interior panel and an exterior panel defining a hollow space, a crossbar member extending through the hollow space in the vehicle door and the crossbar member fixedly attached to an inner face of the exterior panel, a loudspeaker enclosure housing a loudspeaker and mounted to the interior panel of the vehicle door, a first coupling unit fixedly attached to the loudspeaker enclosure, and a second coupling unit fixedly attached to the crossbar member, wherein the second coupling unit is secured to the first coupling unit.

A loudspeaker system may comprise a loudspeaker and a loudspeaker enclosure configured to house the loudspeaker, the loudspeaker enclosure mountable to an interior panel of a vehicle door. The loudspeaker system may further comprise a coupling unit extending from the loudspeaker enclosure and configured to secure the loudspeaker enclosure to a structural component of the vehicle door positioned away from the interior panel, wherein the structural component of the vehicle door comprises a crossbar member extending through a hollow space in the vehicle door defined by the interior panel and an exterior panel of the vehicle door.

A system for securing a loudspeaker system may comprise a loudspeaker and a loudspeaker enclosure housing the loudspeaker. The system may comprise a first coupling unit fixedly attachable to a rear surface of the loudspeaker enclosure, wherein the loudspeaker enclosure is mounted to an interior panel of a vehicle door, and a second coupling unit fixedly attachable to at least one component of the vehicle door positioned away from the interior panel, wherein the second coupling unit is coupleable to the first coupling unit to dampen vibrations of the interior panel when the loudspeaker produces sound, wherein the at least one component of the vehicle door comprises a crossbar member extending through a hollow space in the vehicle door defined by the interior panel and an exterior panel of the vehicle door.

### BRIEF DESCRIPTION OF THE DRAWINGS

The disclosure may be better understood from reading the following description of non-limiting embodiments, with reference to the attached drawings, wherein below:
FIG. 1 shows a block diagram illustrating an example vehicle door system with an integrated loudspeaker enclosure according to an embodiment;
FIG. 2 shows a pictorial perspective view of an example door system with an integrated loudspeaker enclosure according to an embodiment;
FIG. 3 shows a cross-sectional side view of an example door system with an integrated loudspeaker enclosure according to an embodiment;
FIG. 4 shows a rear perspective view of an example loudspeaker enclosure with a coupling unit extending therefrom according to an embodiment;
FIG. 5 shows a rear perspective pictorial view of an example loudspeaker enclosure with a coupling unit extending therefrom and a complementary coupling unit according to an embodiment;
FIG. 6 shows a top pictorial view of an example loudspeaker enclosure secured via multiple coupling units according to an embodiment; and
FIG. 7 shows a top pictorial view of another example loudspeaker enclosure secured via multiple coupling units according to an embodiment.

### DETAILED DESCRIPTION

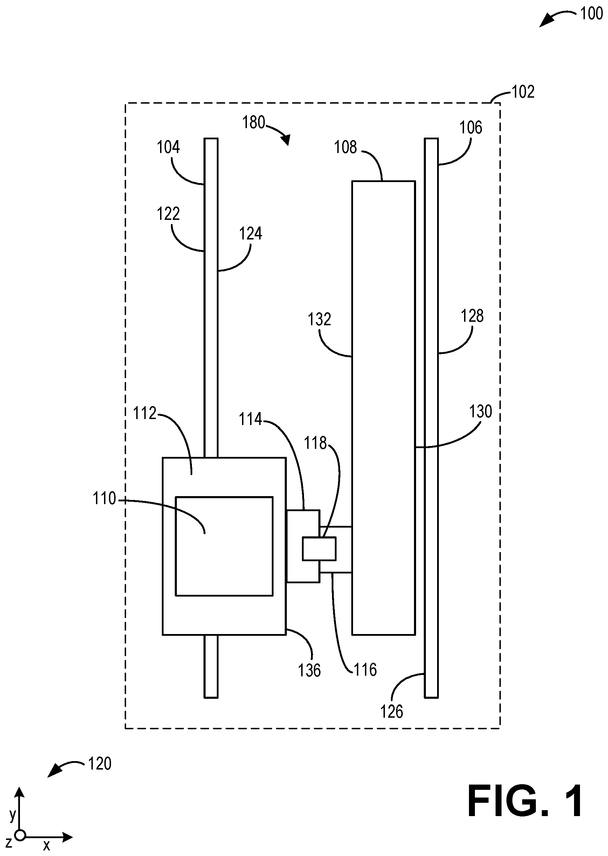

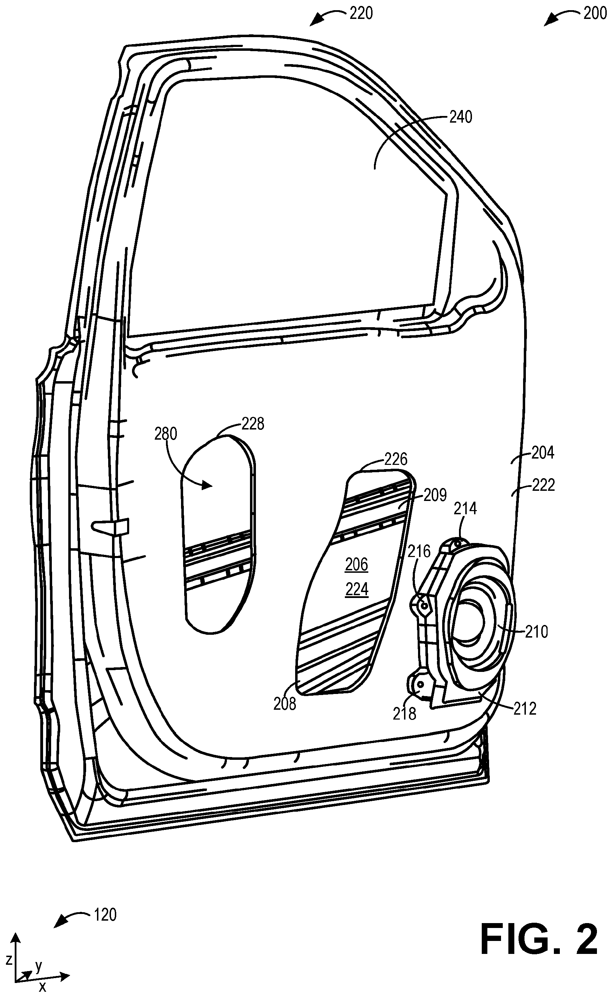

Most commercial vehicles (e.g., trucks, cars, vans) are designed to include an audio system that may enable users to listen to audio output from a radio, global positioning system (GPS), compact discs (CDs), digital versatile discs (DVDs), cassette tapes, and/or media (e.g., videos, MP3s) streaming from a multimedia device (e.g., a smart phone, tablet). The vehicle audio system includes a loudspeaker housed within a loudspeaker enclosure, with the loudspeaker enclosure typically mounted to an inner panel of a vehicle door system, as depicted in FIGS. 1 and 2. The loudspeaker converts electrical signals from the audio system into audible sound, with conversion involving the generation and regulation of vibrational energy by loudspeaker components. This vibrational energy may be inadvertently transferred to the inner panel of the vehicle door to which the loudspeaker enclosure is mounted, causing it to oscillate, move, or flex. Movement of the inner panel of the vehicle door induced by loudspeaker use, increases the amount of vehicle buzz, squeak, and rattle (BSR) which may be concerning or annoying to customers, lead to a perceived lack of vehicle quality, decrease overall satisfaction with the vehicle, and increase warranty claims.

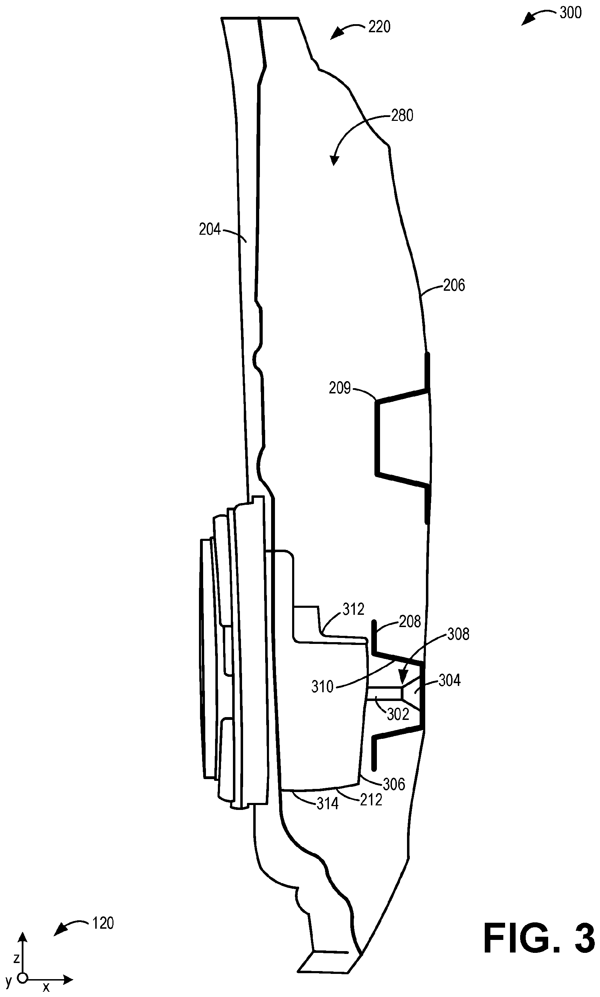

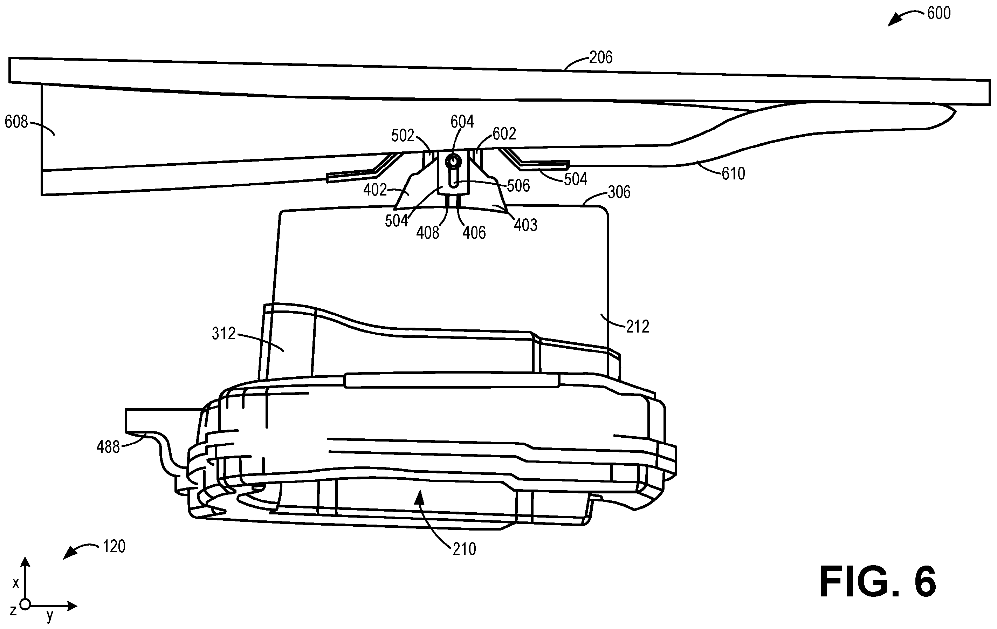

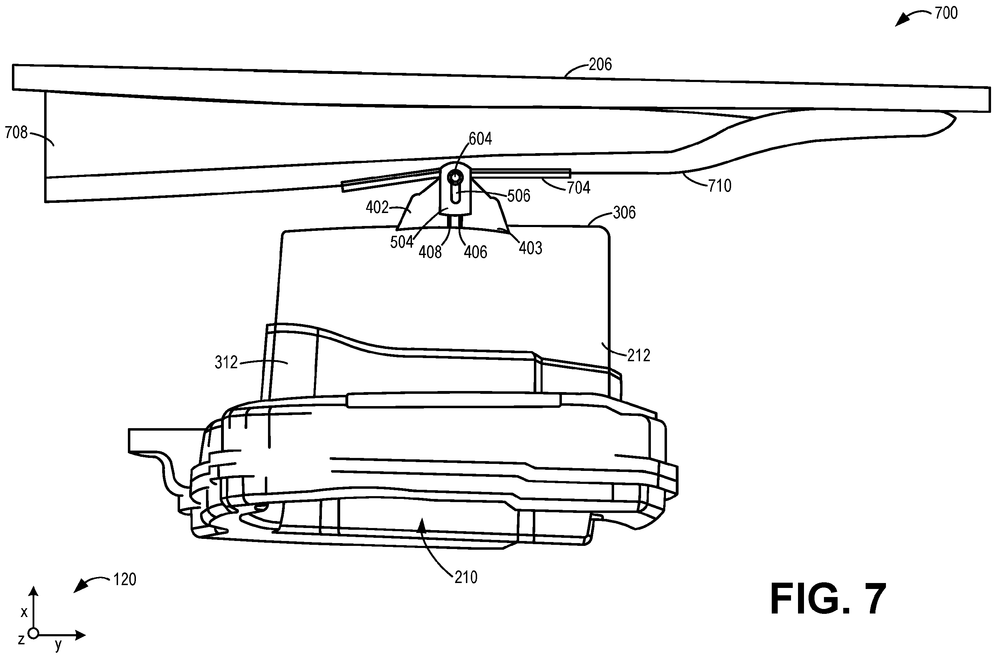

By employing the loudspeaker enclosure integration systems described herein, inner door panel vibration/oscillation generated from loudspeaker use may be eliminated or lessened thereby reducing warranty claims on vehicles due to BSR and increasing customer satisfaction. The systems provided herein include a coupling between a loudspeaker enclosure, an inner panel of a vehicle door, and another structural component of the vehicle door to eliminate or greatly reduce BSR generated from loudspeaker use. In particular, as depicted in FIGS. 3-5, a loudspeaker enclosure may include a first coupling unit extending therefrom to couple to a second coupling unit. As depicted in FIGS. 6 and 7, the second coupling unit is fixed to a structural component such as a crossbar member.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and make part of this disclosure. Further, it should be noted that, the terms "first", "second", and the like in the description and in the claims, are used to distinguishing between similar elements and do not tend to describe a particular sequential and chronological order.

A set of reference axes 120 are provided for comparison between views shown, indicating a y-axis, a z-axis, and an x-axis. In some examples, the z-axis may be parallel with a direction of gravity, with the x and y axes defining the horizontal plane.

Referring to FIG. 1, a block diagram of a door system 100 with a loudspeaker enclosure 112 integrated according to the embodiments disclosed herein is illustrated. The door system 100 may be included, as an illustrative and non-limiting example, as part of a vehicle system (not shown) in which door system 100 may be used to enter and exit the vehicle system. In some examples, door system 100 may be included in the vehicle system using hinge hardware so that door system 100 is attached on a fixed rotatable axis that allows the door system 100 to pivot between a closed position (e.g., a user may not enter the vehicle system) and an open position (e.g., an opening is formed between door system 100 and the vehicle system and a user may enter the vehicle system through the formed opening). For example, the door system 100 may be included in a pick-up truck, sedan, sport utility vehicle, crane, helicopter, airplane, forklift, dump truck, and so on. In some examples, door system 100 may be mounted on or suspended from a track within the vehicle system so that door system 100 may slide along a horizontal axis between an open position that allows users to enter the vehicle system and a closed position. For example, the door system 100 may be included in a tram, train, bus, van, subway cars, and the like.

The door system 100 include a loudspeaker 110 that is communicatively coupled to a sound system (not shown) configured to provide electrical audio signals to the loudspeaker 110, which the loudspeaker 110 converts to audible sound by vibrating responsive to the electrical audio signals, for example. For example, the loudspeaker 110 may comprise a cone (not shown) surrounding and attached to an electromagnetic coil (not shown), with the electromagnetic coil positioned around or inside of a permanent magnet (not shown). During sound system use, electrical signals from the audio source or sound system may pass through the electromagnetic coil of the loudspeaker 110 causing the electromagnetic coil to be continuously attracted and repelled (e.g., vibrate back and forth) from the permanent magnet. The cone to which the electromagnetic coil is attached amplifies these vibrations thereby pumping sound waves into the surrounding air allowing users to listen to audio media within the vehicle system. Some of the vibrational energy generated from the loudspeaker 110 when the sound system is in use may be transferred from the loudspeaker enclosure 112 to the structural component of a door system 100 to which the loudspeaker enclosure 112 is fastened or mounted. For example, use of the loudspeaker 110 may cause an inner door panel, such as the first panel 104, to which the loudspeaker enclosure 112 is mounted to oscillate which, in turn, may cause other vehicle components in contact with the inner door panel to vibrate thereby contributing to overall vehicle BSR. Thus, systems are provided for damping vibrational energy transfer from the loudspeaker 110 and the loudspeaker enclosure 112 to other structural components of vehicle door system 100 when the sound system is in use. It should be appreciated that the systems provided herein for damping the oscillations of a loudspeaker enclosure may be implemented in other structural systems than a vehicle door without departing from the scope of the present disclosure.

The door components 102 of the door system 100 include a first panel 104, a second panel 106, and a crossbar member 108. The first panel 104 and the second panel 106 form inner and outer surfaces of a vehicle door comprising the door system 100, and may be positioned relative to each other to form a hollow cavity 180 or space between the first panel 104 and the second panel 106. The first panel 104 may comprise thin sheet metal, for example, with a limited degree of structure. The first panel 104 includes an inner face 122 which faces inwardly relative to an associated vehicle and an outer face 124 which faces outwardly relative to an associated vehicle. The first panel 104 may include apertures that allow for access to other door components 102 during vehicle assembly and/or the direct or indirect attachment of other functional components, such as a window (not shown), an inside door release handle (not shown) on the inner face 122, a loudspeaker enclosure 112 on inner face 122, and so on. The first panel 104 may be generally parallel to the second panel 106 as depicted.

The second panel 106 includes an inner face 126 which faces inwardly relative to an associated vehicle and an outer face 128 which faces outwardly relative to an associated vehicle. The outer face 128 of the second panel 106, for example, may comprise the exterior surface of a door comprising the door system 100. The second panel 106 may comprise a sheet of metal formed into patterns and/or curves, with the overall formed structure increasing the rigidity of the second panel 106. In some examples, the second panel 106 may have one or more reinforcement panels fixedly attached to the inner face 126. In some examples, the second panel 106 may have a combination of reinforcement panels and crossbar members, such as the crossbar member 108, fixedly attached to the inner face 126. In some examples, the second panel 106 may have one or more crossbar members, such as the crossbar member 108, fixedly attached to the inner face 126.

For example, an outer face 130 of the crossbar member 108 may be welded, bolted, or otherwise suitably fastened to the inner face 126 of second panel 106. The crossbar member 108 may comprise a passive safety device designed to protect vehicle occupants from side impacts. For example, during a vehicle crash, the crossbar member 108 may absorb the energy created during the collision thereby protecting occupants from side impact. As such, the crossbar member 108 may be comprised of high strength grade steel, stainless steel, titanium, aluminum, or another suitable material sufficient to increase the stiffness of the vehicle door and distribute the energy from an impact. The crossbar member 108 may span the length of a vehicle door and be fastened halfway between a bottom surface (not shown) and a midpoint (not shown) of the second panel 106 along the y-axis. In other embodiments, the door system 100 may include multiple crossbar members. For example, in addition to the crossbar member 108, the door system 100 may have a second crossbar member spanning the midsection of second panel 106 along the y-axis.

As previously described, the first panel 104 may include apertures for inserting and connecting additional functional components such as a loudspeaker enclosure 112 which houses at least one loudspeaker 110. At least a portion of the loudspeaker enclosure 112 may be contoured to accommodate the shape of a window (not shown) within the door system 100 when the window is rolled all the way down (e.g., when the window is at its lowest setting). The loudspeaker enclosure 112 may have apertures that are complimentary to additional apertures in the first panel 104 so that fasteners (e.g., bolts/nuts, torque-locking fasteners) may be inserted to connect the two components when the loudspeaker enclosure 112 has been inserted and the apertures are aligned. Alternatively, the loudspeaker enclosure 112 may be epoxy glued or otherwise suitably attached to the first panel 104 after insertion through a complimentary aperture on inner face 122.

While such loudspeaker installation may be secure and is currently the common means employed during vehicle assembly, the loudspeaker 110 may introduce or cause BSR during sound system use. For example, inner vehicle door panels, such as the first panel 104, are being continually re-designed with thinner materials to decrease vehicle weight, thereby improving overall fuel economy, handling, braking time, and so on. Concurrently, loudspeakers with more powerful subwoofers are being integrated into vehicles. As such, when the loudspeaker 110 is in use, the limited structure and slender design of the inner door panel or first panel 104 to which the loudspeaker enclosure 112 is fastened are not enough to prevent the first panel 104 from moving or flexing in response to the lateral energy emitted by the loudspeaker 110. Consequently, the inner door panel 104 may oscillate which, in turn, may cause other functional components of the door system 100 directly or indirectly connected to the inner door panel 104 (e.g. a window, a lock actuator, an interior door handle) to move or vibrate, thereby causing an increase in the BSR of the vehicle. For example, the first panel 104 may flex or vibrate when the loudspeaker 110 is in use which, in turn, may cause other components of the door system 100 to shake or vibrate.

Thus, according to the embodiments disclosed herein, systems are provided to counteract the movement of the inner door panel 104 by creating a coupling effect between the loudspeaker enclosure 112, the door inner panel 104, and another structural component of the vehicle door system 100. For example, a first coupling unit 114 may be attached, fastened, coupled to, or built into to a rear surface 136 of the loudspeaker enclosure 112. The relative positioning of the first coupling unit 114 on the loudspeaker enclosure 112 may be such that the first coupling unit 114 does not disrupt the contoured edge of the loudspeaker enclosure 112 that accommodates the window of the door system 100 when the window is at its lowest setting (e.g., when the window is rolled all the way down). The first coupling unit 114 may extend from the loudspeaker enclosure 112 away from loudspeaker 110 (e.g., laterally opposite to the direction from which sound is emitted from loudspeaker 110) and into the hollow space 180 within door system 100.

The first coupling unit 114 may then be coupled to a second coupling unit 116 via a fastener 118. The fastener 118 may comprise a bolt system, rivet, inseparable snap, or any other suitable means to securely fix or fasten the first coupling unit 114 to the second coupling unit 116. In some embodiments, the first coupling unit 114 may be secured to the second coupling unit 116 without the use of a fastener 118. For example, the first coupling unit 114 may directly interlock with the second coupling unit 118 using a series of complimentary recesses and projections. In some examples, the first coupling unit 114 may be hooked to the second coupling unit 118. In some examples, the first coupling unit 114 may be welded, epoxy glued, or soldered to the second coupling unit 118.

As mentioned hereinabove, the second coupling unit 116 is fixedly attached to a component of the door system 100 positioned away from the first panel 104. In some examples, the second coupling unit 116 may be attached, fastened, coupled to, or built into the inner face 132 of the crossbar member 108. In this way, in addition to being fastened to the first panel 104, the loudspeaker enclosure 112 may also be coupled to the crossbar member 108. By coupling the loudspeaker enclosure 112 to the crossbar member 108, the first panel 104 may be stiffened and the vibrational energy resulting from loudspeaker use dampened. Additionally, the lateral energy emitted by the loudspeaker 110 may be at least partially absorbed by the crossbar member 108. In this way, BSR associated with loudspeaker use may be eliminated or significantly decreased. Further, coupling the loudspeaker enclosure 112 to the crossbar member 108 to reduce BSR makes use of current vehicle design as loudspeakers are typically positioned low and close to the front of a vehicle within a door system 100 (for example, as shown in FIG. 2) to improve acoustics. Crossbar members such as the crossbar member 108 are a required vehicle safety standard, with the lowest crossbar member typically located behind the loudspeaker enclosure 112.

In some examples, the loudspeaker enclosure 112 may be coupled to an additional or alternative structural component of the door system 100. For example, the loudspeaker enclosure 112 may be coupled to the second panel 106 of the door system 100. In some examples, the loudspeaker enclosure 112 may be coupled to the crossbar member 108 as well as the second panel 106 of the door system 100. The first coupling unit 114 may include a plurality of coupling points so that the second coupling unit 116 may be secured to the first coupling unit 114 and a third coupling unit (not shown) may also be secured to the first coupling unit 114. The second coupling unit 116 may be fixedly attached to the crossbar member 108 and the third coupling unit may be fixedly attached to the second panel 106 of the door system 100 or to another component of the door system 100. In other examples, two or more coupling units including the first coupling unit 114 may extend from the speaker enclosure 112 and be secured to complimentary coupling units including the second coupling unit 116 located on different structural components of the vehicle door system 100.

As an illustrative and non-limiting example, FIG. 2 shows a perspective pictorial view of a vehicle door system 200 for a vehicle door 220 including a loudspeaker enclosure 212 securely integrated into the vehicle door 220 according to an embodiment. The door system 200 comprises a first panel 204 and a second panel 206, similar to the first panel 104 and the second panel 106 of the door system 100 described hereinabove. As mentioned hereinabove, the loudspeaker enclosure 212 comprises a housing for at least partially enclosing and supporting a loudspeaker 210.

The first panel 204 includes an inner face 222 which faces inwardly relative to an associated vehicle and an outer face (not shown) which faces outwardly relative to an associated vehicle. The first panel 204 may include several apertures such as first aperture 226, second aperture 228, and a third aperture (not visible) through which the loudspeaker enclosure 212 housing a loudspeaker 210 may be inserted. The first aperture 226 and the second aperture 228 may be used to directly and/or indirectly attach or couple other components of door system 200 (e.g., a window 240, an inner door handle) as well as for enabling access to the hollow space 280 between the first panel 204 and the second panel 206.

The loudspeaker enclosure 212 may be fastened to the inner face 222 of the first panel 204 using a plurality of mounting points including a first mounting point 214, a second mounting point 216, and a third mounting point 218. The mounting points of the loudspeaker enclosure 212 may comprise openings that align with complimentary/corresponding apertures on the first panel 204 (not shown). Once the openings and apertures are aligned, the loudspeaker enclosure 212 may be fastened to the inner face 222 of the first panel 204 using torque-locking fasteners, bolts/nuts, rivets, or another suitable means. In some embodiments, the loudspeaker enclosure 212 may include more or less than three mounting points. In some embodiments, the loudspeaker enclosure 212 may not have mounting points and may be attached to the door inner panel 204 by other suitable means (e.g., epoxy glued). When the loudspeaker enclosure 212 is mounted only to the inner face 222 of the first panel 204, vibrational energy may be transferred to the first panel 204 from the loudspeaker enclosure 212 when the loudspeaker 210 is in use. In turn, vibration of the first panel 204 may cause other components of door system 200 directly and/or indirectly attached or otherwise coupled to the first panel 204 to vibrate, leading to an increase in vehicle BSR.

Further, the door system 200 includes a second panel 206. An outer face (not shown) of the second panel 206 may comprise the external surface of the vehicle door 220. A first crossbar member 208 and a second crossbar member 209 may be fixedly attached to an inner face 224 of the second panel 206. First crossbar member 208 and second crossbar member 209 may be welded, bolted, or otherwise suitably secured to second panel 206. In some examples, the second panel 206 may have also have reinforcement panels (not shown) fixedly attached to the inner face 224. In some examples, the second panel 206 may have only one crossbar member fixedly attached to the inner face 224 (e.g., only the first crossbar member 208 may be welded onto the inner face 224 of the second panel 206). In some embodiments, the door system 200 may have more than two crossbar members.

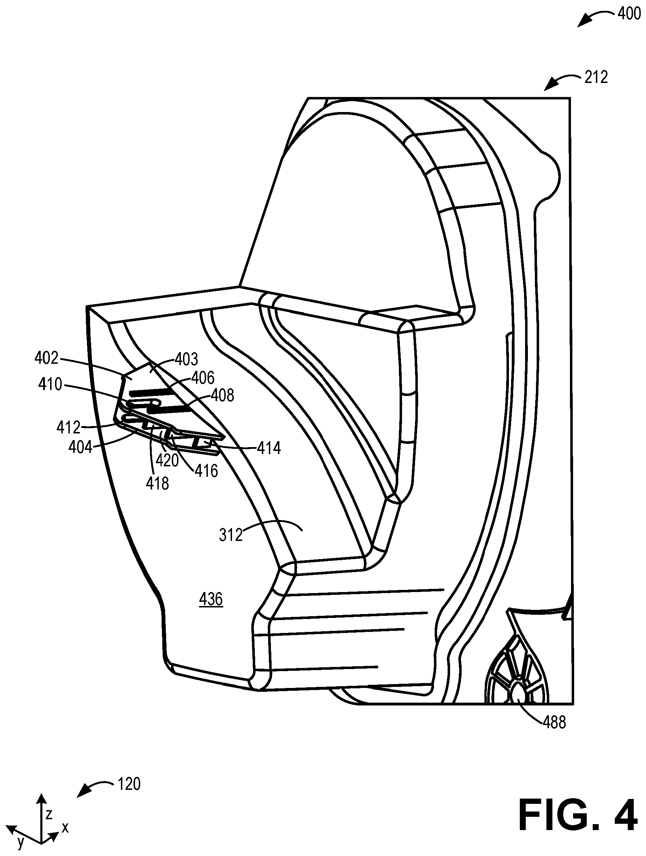

The loudspeaker enclosure 212 may be coupled to at least or at most one of the crossbar members 208 and 209 according to the methods described herein. For example, the loudspeaker enclosure 212 may be coupled to the first crossbar member 208 using coupling units. As an illustrative example, FIG. 3 shows a cross-sectional side pictorial view of a portion 300 of the vehicle door 220 including the loudspeaker enclosure 212. As depicted, a first coupling unit 302 is attached to or built in to a rear surface 306 of the loudspeaker enclosure 212. An example of a first coupling unit 302 is described further herein with regard to FIG. 4.

Further, a second coupling unit 304 is attached to or built in to an inner face 310 of the first crossbar member 208. Examples of how the second coupling unit 304 may be fixedly attached to the crossbar member 208 are described further herein with regard to FIGS. 6 and 7.

The second coupling unit 304 is configured to complement the first coupling unit 302 such that the first coupling unit 302 and the second coupling unit 304 may be securely coupled. The first coupling unit 302 is securely attached or coupled to the second coupling unit 304 via a fastener 308. The fastener 308 may be a bolt system, rivet, or another suitable means to securely couple or fasten the first coupling unit 302 to the second coupling unit 304.

In some examples, the loudspeaker enclosure 212 may be positioned higher within the vehicle door 220 (relative to the z-axis) so that the speaker enclosure 212 may be securely coupled to the second crossbar member 209 via the first coupling unit 302 and a coupling unit (not shown) similar to the second coupling unit 304 and fixedly attached (e.g., welded, bolted) to the second crossbar member 209 using a fastener similar to the fastener 308.

In yet other examples, the loudspeaker enclosure 212 may be coupled, via coupling units such as the coupling unit 302 and the coupling unit 304, to both the first crossbar member 208 and the second crossbar member 209. Such an arrangement may dampen vibrations caused by the loudspeaker 210 in the lateral direction, or along the x-axis, as well as vibrations with y-axis and/or z-axis components.

The rear surface 306 of loudspeaker enclosure 212 may include a contour 312 that accommodates a window, such as the window 240, of the vehicle door 220 when the window 240 is rolled all the way down. The relative positioning of the first coupling unit 302 when fastened to or integrated within the loudspeaker enclosure 212 may be such that the first coupling unit 302 does not disrupt contour 312 and, thus, may not impede window function. The first coupling unit 302 may extend laterally (e.g., along the x-axis) from the rear surface 306 of the loudspeaker enclosure 212 into the hollow space 280 within the vehicle door 220. In some embodiments, the first coupling unit 302 may extend from a bottom surface 314 of the loudspeaker enclosure 212 into the hollow space 280 within the vehicle door 220.

To further illustrate how a first coupling unit may be provided to secure a loudspeaker enclosure, FIG. 4 shows an enlarged rear perspective view 400 of an example loudspeaker enclosure 212 with an example first coupling unit 402. The first coupling unit 402 may comprise the first coupling unit 302 described hereinabove with regard to FIGS. 2 and 3 as well as the first coupling unit 114 described hereinabove with regard to FIG. 1.

The first coupling unit 402 extends outwards from the rear surface 436 of the loudspeaker enclosure 212. The first coupling unit 402 comprises a first section 403 and a second section 404. The first section 403 and the second section 404 may be identical in terms of size, shape, and geometry. In the example shown, the first section 403 and the second section 404 may be shaped with two angled side edges that curve in towards a rounded, pointed front edge, with each angled side edge further connected to a back edge with minimal curvature. In some embodiments, the first section 403 and the second section 404 of the first coupling unit 402 may not be identical in terms of size, shape, and geometry. For example, the first section 403 may be longer than the second section 404, the second section 404 may be a different shape than a first section 403, and so on. Further, the first coupling unit 402 may take on a different overall shape and construction than depicted in FIG. 4 to accommodate for variation among vehicle door panels and loudspeaker enclosure designs. For example, the first coupling unit 402 may be square shaped, triangular, branched/Y shaped, and so on.

The first section 403 may be coupled to the second section 404 by a plurality of spacers attached at a perpendicular angle to the inner facing surfaces (with respect to the overall structure of the first coupling unit 402) of the first section 403 and the second section 404. For example, the plurality of spacers may include a first spacer 414, a second spacer 416, and a third spacer 418, with a first side of each spacer attached to an inner face 420 of the second section 404 and a second side of each spacer attached to an inner face (not visible) of the first section 403. The plurality of spacers may be arranged so that an opening or chamber is formed between each adjacent spacer. The first coupling unit 402 may further include a first hole 410 in the first section 403 and a second hole 412 in the second section 404, with the first hole 410 aligned with the second hole 412 with respect to the z-axis. The first section 403 may additionally include a first groove 406 and a second groove 408. The first hole 410, the second hole 412, the first groove 406, and the second groove 408 as well as the overall geometry of the first coupling unit 402 may be designed to interact with a second coupling unit such as the second coupling unit 304, so that the first coupling unit 402 may be securely attached to the second coupling unit 304 via a coupling or fastener (e.g., fastener 308 of FIG. 3).

In some embodiments, the first coupling unit 402 may be inserted into a second coupling unit 304 and be secured to the second coupling unit 304 via the fastener 308. In some embodiments, the first coupling unit 402 may interlock with the second coupling unit 304 without the use of the fastener 308 after the first coupling unit 402 is inserted into the second coupling unit 304. In some embodiments, the first coupling unit 402 may be another structural component (e.g., a bracket, a hook) designed to interact and be securely attached to the second coupling unit 304 with or without the use of the fastener 308.

It should be appreciated that FIG. 4 further depicts a mounting point 488 similar to the third mounting point 218 described hereinabove with regard to FIG. 2. The loudspeaker enclosure 212 may include additional such mounting points to secure the loudspeaker enclosure 212 to a door panel such as the first panel 204.

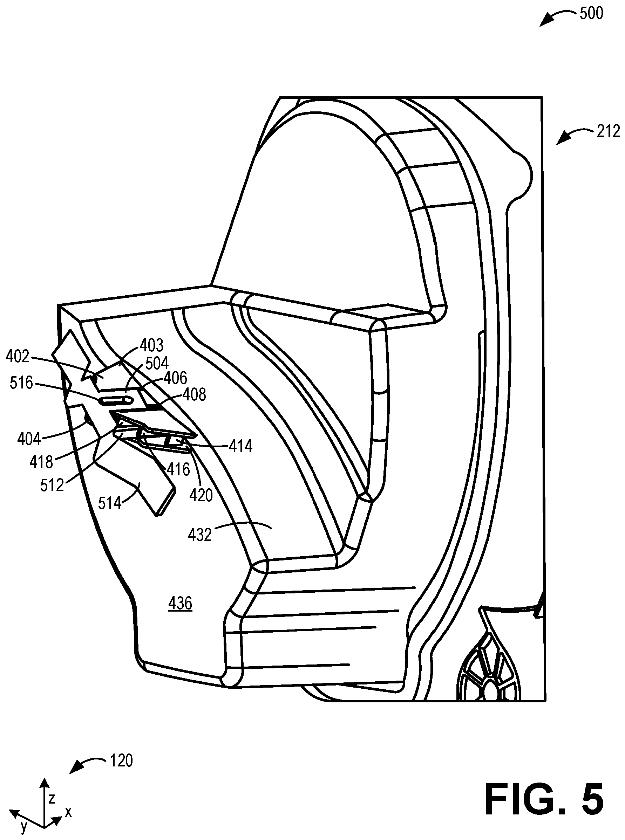

To illustrate the interface between coupling units, FIG. 5 shows a rear perspective view 500 of the loudspeaker enclosure 212 that includes the first coupling unit 402 as well as a second coupling unit 504 that may be implemented as the second coupling unit 304 or 116 described hereinabove. The second coupling unit 504 may comprise an intermediate bracket that may interface with first coupling unit 402 and a structural component of the door system (e.g., the first crossbar member 208, the second crossbar member 209, the second panel 206, and so on). In other embodiments, the second coupling unit 504 may not be an intermediate bracket and may be another type of coupling device (e.g., a hook, a clasp) that may interlock or be securely attached to the first coupling unit 402 and the structural component of the door system. The second coupling unit 504 may be generally M-shaped, and comprised of a first leg 512 and a second leg (not shown). The first leg 512 and the second leg may be inserted into complementary openings/chambers within the first coupling unit 402 formed between the plurality of spacers (e.g., first spacer 414, a second spacer 416) that adjoin the first section 403 and the second section 404 of the first coupling unit 402. For example, the first leg 512 may be inserted into the first coupling unit 402 via the opening formed between the second spacer 416 and the third spacer 418. The underside of a middle portion 514 of the second coupling unit 504 may also include a first ridge and a second ridge (not visible) that, respectively, fit into the first groove 406 and the second groove 408 of first coupling unit 402 when second coupling unit 504 is inserted into first coupling unit 402.

Further, the middle portion 514 of the second coupling unit 504 may include a hole 516 that is complementary in size, shape, and geometry to the first hole 410 in the first section 403 and the second hole 412 in the second section 404 of the first coupling unit 402. When the hole 516 is fully or partially aligned to the first hole 410 and the second hole 412, an oval-shaped slot may be formed between the first coupling unit 402 and the second coupling unit 504, with the length of the formed slot determined by the amount of face sharing contact between the first coupling unit 402 and the second coupling unit 504. The formed slot may be used to securely attach the first coupling unit 402 to the second coupling unit 504 via a coupling or fastener (e.g., a bolt system, a clamp) which may be inserted through or attached to the formed slot. The first coupling unit 402 may be securely attached to the second coupling unit 504 at different distances relative to the door system based on the amount of face-sharing contact between the second coupling unit 504 and the first coupling unit 402. For example, the second coupling unit 504 may be fully or partially inserted into the first coupling unit 402, thereby changing the length of the formed slot between the first coupling unit 402 and the second coupling unit 504 and, thus, the amount of options for coupling placement.

For example, the second coupling unit 504 may be fully inserted into the first coupling unit 402 when the loudspeaker enclosure 212 is close to the structural component of the door system to which the loudspeaker enclosure 212 is to be coupled. In another example, the second coupling unit 504 may be partially inserted into the first coupling unit 402 when the loudspeaker enclosure 212 is at a greater distance to the structural component of the door system to which the loudspeaker enclosure 212 is to be coupled than in the example above. Thus, the formed slot may account for space variations that may occur between the loudspeaker enclosure 212 and the structural component of the door system to which the loudspeaker enclosure 212 is to be coupled, as further described with respect to FIG. 6.

FIGS. 6 and 7 illustrate how a loudspeaker enclosure such as the loudspeaker enclosure 212 may be coupled to a component of a door system. In particular, FIG. 6 shows a top pictorial view 600 of the loudspeaker enclosure 212 secured to a crossbar member 608, which may comprise the crossbar member 208, according to an embodiment. The crossbar member 608 may be designed for the integration of the second coupling unit 504, with a portion of the crossbar member 608 specifically shaped to accommodate the structure of the second coupling unit 504 as shown. The second coupling unit 504 may be built into a front side 610 of the crossbar member 608 or may be attached via suitable means (e.g., bolts/nuts, welding, soldering, and so on). Once attached or otherwise integrated into the crossbar member 608, the first leg 502 and a second leg 602 of the second coupling unit 504 may be inserted into the first coupling unit 402 as previously described. The second coupling unit 504 may be inserted into the first coupling unit 402 until hole 506 is partially or fully aligned with the first hole 410 and the second hole 412 of the first coupling unit 402. The partial or full alignment of hole 506 with the first hole 410 and the second hole 412 may be such that a fastener 604 may be inserted through the opening/slot formed by aligning all three holes. The fastener 604 may be a bolt system, rivet, inseparable snap, or another suitable fastener that allows for the second coupling unit 504 to be securely attached to the first coupling unit 402. The fastener 604 may be inserted at any point within the opening/slot formed by aligning all three holes. Thus, the relative positioning of the first coupling unit 402, with respect to the second coupling unit 504, may be adjusted to account for distance variations (e.g., due to cross vehicle build variation and different loudspeaker enclosure designs) that may occur between the loudspeaker enclosure 212 and the structural component of the door system to which the loudspeaker enclosure 212 may be coupled.

As another example, the crossbar member 608 may not be adapted to accommodate the second coupling unit 504. As an illustrative example, FIG. 7 shows a top pictorial view 700 of the loudspeaker enclosure 212 secured to a crossbar member 708, which may comprise the crossbar member 208 described hereinabove, via a first coupling unit 402 and a second coupling unit 704. As depicted, the second coupling unit 704 may is configured to be directly attached to a front side 710 of the crossbar member 708 by suitable means (e.g., bolts/nuts, welding, etc.). The second coupling unit 704 may then be coupled to the first coupling unit 402 as previously described via the fastener 604.

In other embodiments, the loudspeaker enclosure 212 may be coupled to a door outer panel (e.g., second panel 206) as described. For example, the second coupling unit 304 may be integrated into the design and manufacture of the outer panel or the second coupling unit 304 may be attached to the outer panel via suitable means (e.g., bolted, welded, etc.). The second coupling unit 304 may then be coupled to the first coupling unit 302 which may be fixedly coupled or integrated into the loudspeaker enclosure 212. By incorporating the second coupling unit 304 into the door outer panel 206, more options for the relative positioning of the loudspeaker 210/loudspeaker enclosure 212 within the door system may be provided (e.g. as compared to using a second coupling unit incorporated on or within a crossbar member which has limited vertical space).

In some embodiments, the loudspeaker enclosure 212 may be coupled to more than one structure of the door system. In one example, the loudspeaker enclosure 212 may include multiple coupling units that may be coupled to corresponding coupling units located on multiple door structures (e.g., the loudspeaker enclosure 212 may have a first coupling unit that couples to a corresponding coupling unit on a crossbar member and a second coupling unit that couples to a corresponding coupling unit on an outer door panel). In another example, the loudspeaker enclosure 212 may include a first coupling unit with multiple pairs of holes (e.g., a first pair may include the first hole 410 and the second hole 412), with each hole pair coupled to a different second coupling unit (e.g., both a second coupling unit on a crossbar member and a second coupling unit on a door outer panel may be simultaneously coupled to a first coupling unit of a loudspeaker enclosure). In this way, the systems and methods described herein, may create a coupling effect between a loudspeaker enclosure mounted to a first surface of a vehicle door, and another structural component of the vehicle door so that BSR from loudspeaker use may be dampened, reduced, or eliminated.

In one embodiment, a system for a vehicle door comprises a loudspeaker enclosure housing a loudspeaker and mounted to an interior panel of the vehicle door, a first coupling unit fixedly attached to the loudspeaker enclosure, and a second coupling unit fixedly attached to a component of the vehicle door away from the interior panel, wherein the second coupling unit is secured to the first coupling unit.

In a first example of the system, the component of the vehicle door comprises an exterior panel of the vehicle door. In a second example of the system optionally including the first example, the component of the vehicle door comprises a crossbar member extending through a hollow space in the vehicle door defined by the interior panel and an exterior panel of the vehicle door. In a third example of the system optionally including one or more of the first and second examples, the second coupling unit is secured to the first coupling using a fastener. In a fourth example of the system optionally including one or more of the first through third examples, the loudspeaker is configured to generate sound by vibrating in a lateral direction, wherein the first coupling unit extends from the loudspeaker enclosure in the lateral direction and is secured to the second coupling unit along the lateral direction to dampen vibrations of the interior panel caused by vibrations of the loudspeaker. In a fifth example of the system optionally including one or more of the first through fourth examples, the first coupling unit is fixedly attached to a rear side of the loudspeaker enclosure adjacent to a contoured surface of the loudspeaker enclosure, and the contoured surface of the loudspeaker enclosure is contoured to accommodate a window of the vehicle door when the window is lowered to a lowest position. In a sixth example of the system optionally including one or more of the first through fifth examples, the first coupling unit includes a first hole, the second coupling unit includes a second hole, and the first coupling unit and the second coupling unit are in face-sharing contact with the first hole and the second hole at least partially aligned to form a coupling slot. In a seventh example of the system optionally including one or more of the first through sixth examples, the system further comprises a fastener extending through the coupling slot to secure the first coupling unit to the second coupling unit. In an eighth example of the system optionally including one or more of the first through seventh examples, a size of the coupling slot varies with the extent of face-sharing contact between the second coupling unit and the first coupling unit.

In another embodiment, a loudspeaker system comprises a loudspeaker, a loudspeaker enclosure configured to house the loudspeaker, the loudspeaker enclosure mountable to an interior panel of a vehicle door, and a coupling unit extending from the loudspeaker enclosure and configured to secure the loudspeaker enclosure to a structural component of the vehicle door positioned away from the interior panel.

In a first example of the loudspeaker system, the coupling unit is coupleable to a second coupling unit extending from the structural component to secure the loudspeaker enclosure. In a second example of the loudspeaker system optionally including the first example, the loudspeaker emits sound in a lateral direction, and the loudspeaker enclosure is secured to the structural component of the vehicle door in the lateral direction. In a third example of the loudspeaker system optionally including one or more of the first and second examples, the coupling unit includes a first hole, the second coupling unit includes a second hole, and the coupling unit is coupleable to the second coupling unit when the coupling unit and the second coupling unit are in face-sharing contact and the first hole is at least partially aligned with the second hole. In a fourth example of the loudspeaker system optionally including one or more of the first through third examples, the loudspeaker system further comprises a fastener extending through the first hole and the second hole to securely couple the coupling unit to the second coupling unit. In a fifth example of the loudspeaker system optionally including one or more of the first through fourth examples, the first hole is stadium-shaped or oval-shaped and the second hole is stadium-shaped or oval-shaped, and the coupling unit is coupleable to the second coupling unit when the first hole is at least partially aligned with the second hole to produce at least a circular slot for the fastener to extend therethrough. In a sixth example of the loudspeaker system optionally including one or more of the first through fifth examples, the component of the vehicle door comprises one of an exterior panel of the vehicle door, or a crossbar member extending through a hollow space defined by the interior panel and the exterior panel.

In one embodiment, a system for securing a loudspeaker system comprising a loudspeaker and a loudspeaker enclosure housing the loudspeaker is provided. The system comprises a first coupling unit fixedly attachable to a rear surface of the loudspeaker enclosure, wherein the loudspeaker enclosure is mounted to an interior panel of a vehicle door, and a second coupling unit fixedly attachable to at least one component of the vehicle door positioned away from the interior panel, wherein the second coupling unit is coupleable to the first coupling unit to dampen vibrations of the interior panel when the loudspeaker produces sound.

In a first example of the system, the first coupling unit includes a first hole, the second coupling unit includes a second hole, and the first coupling unit is coupleable to the second coupling unit when the first coupling unit and the second coupling unit are in face-sharing contact and the first hole is at least partially aligned with the second hole. In a second example of the system optionally including the first example, the system further comprises a fastener that extends through the first hole and the second hole to secure the first coupling unit to the second coupling unit. In a third example of the system optionally including one or more of the first and second examples, the at least one component comprises one or more of a crossbar member and an exterior panel of the vehicle door positioned opposite to the interior panel.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects.

While various embodiments of the invention have been described, it will be apparent to those of ordinary skilled in the art that many more embodiments and implementations are possible within the scope of the invention as defined by the appended claims. In particular, the skilled person will recognize the interchangeability of various features from different embodiments.

## Claims

1. A vehicle door, comprising:
an interior panel (104) and an exterior panel (106) defining a hollow space (180);
a crossbar member (108) extending through the hollow space (180) in the vehicle door and the crossbar member (108) fixedly attached to an inner face (224) of the exterior panel (106);
a loudspeaker enclosure (112) housing a loudspeaker (110) and mounted to the interior panel (104) of the vehicle door;
a first coupling unit (114) fixedly attached to the loudspeaker enclosure (112); and
a second coupling unit (116) fixedly attached to the crossbar member (108), wherein the second coupling unit (116) is secured to the first coupling unit (114).

2. The vehicle door of claim 1, further comprising a second crossbar member (209), wherein the second coupling unit (116) is further fixedly attached to the second crossbar member (209) the second crossbar member (108, 209) fixedly attached to the inner face (224) of the exterior panel (206) of the vehicle door.

3. The vehicle door of claim 1, wherein the second coupling unit (116) is secured to the first coupling unit (114) using a fastener (118).

4. The vehicle door of claim 1, wherein the loudspeaker (110) is configured to generate sound by vibrating in a lateral direction, wherein the first coupling unit (114) extends from the loudspeaker enclosure (112) in the lateral direction and is secured to the second coupling unit (116) along the lateral direction to dampen vibrations of the interior panel (104) caused by vibrations of the loudspeaker (110).

5. The vehicle door of claim 1, wherein the first coupling unit (114) is fixedly attached to a rear side of the loudspeaker enclosure (112) adjacent to a surface of the loudspeaker enclosure (112), wherein the surface of the loudspeaker enclosure (112) accommodates a window of the vehicle door when the window is lowered to a lowest position.

6. The vehicle door of claim 1, wherein the first coupling unit (114) includes a first hole (410), wherein the second coupling unit (116) includes a second hole (516), and wherein the first coupling unit (114) and the second coupling unit (116) are in face-sharing contact with the first hole (410) and the second hole (516) at least partially aligned to form a coupling slot.

7. The vehicle door of claim 6, further comprising a fastener (118) extending through the coupling slot to secure the first coupling unit (114) to the second coupling unit (116).

8. The vehicle door of claim 7, wherein a size of the coupling slot varies with the extent of face-sharing contact between the second coupling unit (116) and the first coupling unit (114).

9. The vehicle door of claim 1, wherein the second coupling unit (116) is configured to be directly attached to a front side of the crossbar member (108).

## Patentansprüche

1. Fahrzeugtür, die Folgendes umfasst:
eine Innenverkleidung (104) und eine Außenverkleidung (106), die einen Hohlraum (180) definieren;
einen Querträger (108), der sich durch den Hohlraum (180) in der Fahrzeugtür erstreckt, und wobei der Querträger (108) fest an einer Innenfläche (224) der Außenverkleidung (106) befestigt ist;
eine Lautsprecherbox (112), die einen Lautsprecher (110) aufnimmt und an der Innenverkleidung (104) der Fahrzeugtür angebracht ist;
eine erste Kopplungseinheit (114), die fest an der Lautsprecherbox (112) befestigt ist; und
eine zweite Kopplungseinheit (116), die fest an dem Querträger (108) befestigt ist, wobei die zweite Kopplungseinheit (116) an der ersten Kopplungseinheit (114) gesichert ist.

2. Fahrzeugtür nach Anspruch 1, ferner umfassend einen zweiten Querträger (209), wobei die zweite Kopplungseinheit (116) ferner fest an dem zweiten Querträger (209) befestigt ist, wobei der zweite Querträger (108, 209) fest an der Innenfläche (224) der Außenverkleidung (206) der Fahrzeugtür befestigt ist.

3. Fahrzeugtür nach Anspruch 1, wobei die zweite Kopplungseinheit (116) unter Verwendung eines Befestigungselements (118) an der ersten Kopplungseinheit (114) gesichert ist.

4. Fahrzeugtür nach Anspruch 1, wobei der Lautsprecher (110) dazu konfiguriert ist, Schall durch Schwingen in einer Querrichtung zu erzeugen, wobei sich die erste Kopplungseinheit (114) von der Lautsprecherbox (112) in der Querrichtung erstreckt und entlang der Querrichtung an der zweiten Kopplungseinheit (116) gesichert ist, um Schwingungen der Innenverkleidung (104) zu dämpfen, die durch Schwingungen des Lautsprechers (110) verursacht werden.

5. Fahrzeugtür nach Anspruch 1, wobei die erste Kopplungseinheit (114) fest an einer Rückseite der Lautsprecherbox (112) benachbart zu einer Fläche der Lautsprecherbox (112) befestigt ist, wobei die Fläche der Lautsprecherbox (112) Platz für ein Fenster der Fahrzeugtür bietet, wenn das Fenster in eine niedrigste Position abgesenkt ist.

6. Fahrzeugtür nach Anspruch 1, wobei die erste Kopplungseinheit (114) ein erstes Loch (410) beinhaltet, wobei die zweite Kopplungseinheit (116) ein zweites Loch (516) beinhaltet und wobei die erste Kopplungseinheit (114) und die zweite Kopplungseinheit (116) in anliegendem Kontakt mit dem ersten Loch (410) und dem zweiten Loch (516) zumindest teilweise ausgerichtet sind, um einen Kopplungsschlitz zu bilden.

7. Fahrzeugtür nach Anspruch 6, ferner umfassend ein Befestigungselement (118), das sich durch den Kopplungsschlitz erstreckt, um die erste Kopplungseinheit (114) an der zweiten Kopplungseinheit (116) zu sichern.

8. Fahrzeugtür nach Anspruch 7, wobei eine Größe des Kopplungsschlitzes mit dem Ausmaß des anliegenden Kontakts zwischen der zweiten Kopplungseinheit (116) und der ersten Kopplungseinheit (114) variiert.

9. Fahrzeugtür nach Anspruch 1, wobei die zweite Kopplungseinheit (116) dazu konfiguriert ist, direkt an einer Vorderseite des Querträgers (108) befestigt zu sein.

## Revendications

1. Porte de véhicule, comprenant :
un panneau intérieur (104) et un panneau extérieur (106) définissant un espace creux (180) ;
un élément de barre transversale (108) se prolongeant à travers l'espace creux (180) dans la porte de véhicule et l'élément de barre transversale (108) fixé de manière fixe à une face interne (224) du panneau extérieur (106) ;
une enceinte de haut-parleur (112) abritant un haut-parleur (110) et monté sur le panneau intérieur (104) de la porte de véhicule ;
une première unité de couplage (114) fixée de manière fixe à l'enceinte de haut-parleur (112) ; et
une seconde unité de couplage (116) fixée de manière fixe à l'élément de barre transversale (108), dans laquelle la seconde unité de couplage (116) est fixée à la première unité de couplage (114).

2. Porte de véhicule selon la revendication 1, comprenant également un second élément de barre transversale (209), dans laquelle la seconde unité de couplage (116) est également fixée de manière fixe au second élément de barre transversale (209), le second élément de barre transversale (108, 209) est fixé de manière fixe à la face interne (224) du panneau extérieur (206) de la porte de véhicule.

3. Porte de véhicule selon la revendication 1, dans laquelle la seconde unité de couplage (116) est fixée à la première unité de couplage (114) à l'aide d'un élément de fixation (118).

4. Porte de véhicule selon la revendication 1, dans laquelle le haut-parleur (110) est configuré pour générer un son en vibrant dans une direction latérale, dans laquelle la première unité de couplage (114) se prolonge à partir de l'enceinte de haut-parleur (112) dans la direction latérale et est fixée à la seconde unité de couplage (116) le long de la direction latérale pour amortir les vibrations du panneau intérieur (104) provoquées par les vibrations du haut-parleur (110).

5. Porte de véhicule selon la revendication 1, dans laquelle la première unité de couplage (114) est fixée de manière fixe à un côté arrière de l'enceinte de haut-parleur (112) adjacent à une surface de l'enceinte de haut-parleur (112), dans laquelle la surface de l'enceinte de haut-parleur (112) abrite une fenêtre de la porte de véhicule lorsque la fenêtre est abaissée à une position la plus basse.

6. Porte de véhicule selon la revendication 1, dans laquelle la première unité de couplage (114) comporte un premier trou (410), dans laquelle la seconde unité de couplage (116) comporte un second trou (516), et dans laquelle la première unité de couplage (114) et la seconde unité de couplage (116) sont en contact de partage de face avec le premier trou (410) et le second trou (516) au moins partiellement alignés pour former une fente de couplage.

7. Porte de véhicule selon la revendication 6, comprenant également un élément de fixation (118) se prolongeant à travers la fente de couplage pour fixer la première unité de couplage (114) à la seconde unité de couplage (116).

8. Porte de véhicule selon la revendication 7, dans laquelle la taille de la fente de couplage varie en fonction de l'étendue du contact de partage de face entre la seconde unité de couplage (116) et la première unité de couplage (114).

9. Porte de véhicule selon la revendication 1, dans laquelle la seconde unité de couplage (116) est configurée pour être directement fixée à un côté avant de l'élément de barre transversale (108).
